# EUROPEAN PATENT APPLICATION

(11) **EP 1 321 852 A1**
(43) Date of publication of application: **25.06.2003**
(21) Application number: 01460062.1
(22) Date of filing: 03.10.2001
(51) Int. Cl.: G06F 9/44

(54) **Modular logic platform**

(71) Applicant: C O2W3 SAS, 22300 Lannion (FR)
(72) Inventor: Lefevre, Laurent, 22560 Pleumeur-Bodou (FR)
(74) Representative: Maillet, Alain

(57) **Abrégé**

La présente invention concerne une plate-forme logicielle SWPLF, incluant :
. une application principale MNA, destinée à gérer des échanges d'informations entre la plate-forme logicielle et un utilisateur de ladite plate-forme, et
. au moins une application périphérique A1,A2...AN possédant une fonctionnalité propre et destinée à être contrôlée par l'application principale MNA après avoir été chargée depuis un serveur ou un support de données sur commande de l'utilisateur.

L'invention permet à un utilisateur de construire lui-même une plate-forme logicielle SWPLF conforme à ses seuls besoins, lui permettant ainsi d'économiser des frais d'achat et de fonctionnement par rapport à ceux occasionnés par une plate-forme standard comportant de multiples fonctionnalités dont la plupart ne correspondent pas aux besoins de l'utilisateur. Par ailleurs, dans une plate-forme logicielle conforme à l'invention chaque fonctionnalité peut être mise à jour individuellement.

## Description

La présente invention concerne une plate-forme logicielle, par exemple destinée à des applications de publication ou de conception assistées par ordinateur.

La plupart des plates-formes logicielles disponibles dans le commerce sont des outils informatiques formant des ensembles très complexes, offrant à un utilisateur une multitude de fonctionnalités différentes dont l'utilisateur n'exploite généralement qu'une petite partie, faute de temps à consacrer à une étude approfondie de toutes les fonctionnalités et d'occasions pour utiliser de manière pertinente chacune de ces fonctionnalités. L'utilisateur devra cependant acquérir une plate-forme logicielle complète et installer l'ensemble de celle-ci sur un terminal, par exemple un ordinateur personnel, ce qui constitue pour cet utilisateur un gaspillage d'argent et de ressources mémoire de son terminal, sans compter que les opérations menées par la plate-forme logicielle auront des temps d'exécution inutilement longs du fait de la complexité de ladite plate-forme.

De plus, une mise à jour d'une seule fonctionnalité de la plate-forme nécessitera le plus souvent une mise à jour de l'ensemble de la plate-forme, ce qui occasionnera encore une dépense et une utilisation de ressources exagérément importante par rapport au résultat effectivement produit par la mise à jour.

La présente invention a pour but de remédier dans une large mesure à ces inconvénients en proposant une plate-forme logicielle adaptable par l'utilisateur aux besoins réels de celui-ci, de sorte qu'elle n'incorpore que des fonctionnalités qu'il projette d'utiliser effectivement, lesdites fonctionnalités présentant une autonomie permettant de les mettre à jour séparément.

A cet effet, une plate-forme logicielle selon l'invention inclut :
. une application principale, destinée à gérer des échanges d'informations entre la plate-forme logicielle et un utilisateur de ladite plate-forme, et
. au moins une application périphérique possédant une fonctionnalité propre et destinée à être contrôlée par l'application principale après chargement depuis un support mémoire sur commande de l'utilisateur.

Une telle plate-forme logicielle ne contiendra que la ou les applications périphériques que l'utilisateur aura lui-même choisi de charger. Cette plate-forme sera ainsi construite pour ainsi dire sur mesure par l'utilisateur en fonction de ses besoins propres, et n'occupera en mémoire que la place nécessaire aux moyens à mettre en oeuvre pour répondre à ces besoins. Par ailleurs, chaque fonctionnalité étant assurée par une application périphérique bien déterminée et indépendante des autres applications périphériques, ladite fonctionnalité pourra être mise à jour de manière individuelle par remplacement d'une version de l'application périphérique concernée par une nouvelle version, et éventuellement remplacement de certains modules de l'application principale qui concerneraient spécifiquement ladite application périphérique.

Dans certaines applications de l'invention, le support mémoire pourra être constitué par un élément amovible, comme un disque ou une bande magnétique, ou encore un disque magnéto-optique ou optique du type CD ou DVD. Dans d'autres applications, le support mémoire pourra être inclus dans un serveur apte à communiquer avec l'utilisateur via un réseau de communication.

Dans un mode de réalisation de l'invention, une plate-forme logicielle telle que décrite ci-dessus incluera au moins deux applications périphériques aptes à échanger des données entre elles via l'application principale.

Dans un tel mode de réalisation, les échanges de données entre deux applications périphériques transitent par l'application principale, qui assurera si nécessaire une remise en forme des données provenant d'une application périphérique émettrice avant envoi desdites données à une application périphérique destinataire. Il n'est donc pas nécessaire, dans ce mode de réalisation, de munir les applications périphériques de moyens destinés à opérer de telles remises en forme, qui rendraient lesdites applications périphériques beaucoup plus complexes et nuiraient à l'autonomie dont elles bénéficient les unes par rapport aux autres, autonomie qui confère à la plate-forme logicielle selon l'invention une grande modularité.

Dans un autre mode de réalisation de l'invention, l'application principale est munie de moyens de contrôle pour inhiber des accès à des ressources mémoire par une application périphérique.

Ces moyens de contrôle permettent de prévenir des conflits d'accès qui pourraient se produire si plusieurs applications périphériques tentaient simultanément d'agir sur des mêmes données. En effet, dans ce mode de réalisation de l'invention, tous les accès mémoire des applications périphériques se feront au travers de l'application principale dont les moyens de contrôle vérifieront qu'aucune application périphérique n'essaie d'accéder au contenu d'une adresse déjà en cours d'utilisation par une autre application périphérique.

Dans un mode de réalisation particulier de l'invention, l'application principale est munie d'une interface graphique permettant une communication entre ladite application et l'utilisateur, et des interfaces graphiques dont sont munies les applications périphériques incluses dans la plate-forme sont intégrées à l'interface graphique de l'application principale.

Ce mode de réalisation permet de construire une interface graphique propre à la plate-forme logicielle telle que définie par l'utilisateur et visuellement cohérente pour celui-ci.

Selon un autre mode de réalisation de l'invention, une plate-forme logicielle telle que décrite plus haut inclut en outre des moyens de gestion des applications périphériques permettant d'inhiber le chargement d'une telle application si l'utilisateur n'a pas réalisé une condition à laquelle le chargement est assujetti.

Ce mode de réalisation permet d'assurer le respect de droits de propriété intellectuelle détenus par exemple par des créateurs des applications périphériques, en ce sens qu'il requiert une autorisation des détenteurs de tels droits pour tout téléchargement, autorisation qui est matérialisée par la réalisation de la condition à laquelle le téléchargement est assujetti.

En particulier, une telle condition pourra être une condition de paiement, forfaitaire ou renouvelable dans le temps. Dans ce dernier cas, les moyens de gestion pourront inclure une table de gestion comportant, pour chaque application périphérique, un code identifiant ladite application et une date limite d'autorisation d'utilisation de ladite application par l'utilisateur.

Dans ce mode de réalisation particulier, l'utilisateur sera en quelque sorte locataire des applications périphériques qu'il aura chargées. S'il souhaite ultérieurement faire un achat d'une application périphérique, il pourra payer une somme forfaitaire à cet effet, auquel cas toute mention de l'application périphérique sera supprimée de la table de gestion.

L'invention concerne également, en tant qu'élément essentiel à l'invention considéré dans son individualité, un logiciel apte à remplir les fonctions d'une application principale dans une plate-forme logicielle telle que décrite plus haut.

L'invention concerne aussi, en tant qu'élément essentiel à l'invention considéré dans son individualité, un logiciel apte à remplir les fonctions d'une application périphérique dans une plate-forme logicielle telle que décrite plus haut.

L'invention concerne en outre, dans l'un de ses multiples modes de commercialisation possibles, un support de données incluant sous forme encodée l'un des logiciels décrits ci-dessus.

Dans l'un de ses modes de mise en oeuvre possibles, l'invention concerne un système de traitement de données incluant un serveur et un terminal destiné à être mis à disposition d'un utilisateur du système, le serveur et le terminal étant aptes à échanger des informations l'un avec l'autre, système dans lequel une plate-forme logicielle telle que décrite plus haut est installée sur des moyens de mémorisation inclus dans le terminal.

Dans un mode de réalisation avantageux d'un tel système, le serveur est muni de moyens de mémorisation contenant des moyens de gestion des applications périphériques permettant d'inhiber le chargement d'une telle application si l'utilisateur n'a pas réalisé une condition à laquelle le chargement est assujetti.

Le fait de placer les moyens de gestion au sein du serveur, c'est-à-dire de faire en sorte qu'ils ne soient pas directement accessibles par l'utilisateur, limite les risques de fraude de la part de l'utilisateur.

Dans un mode de mise en oeuvre en réseau multi-utilisateurs, l'invention concerne aussi un système de traitement de données incluant un serveur et une pluralité de terminaux destinés à être mis à disposition d'une pluralité d'utilisateurs du système, le serveur étant apte à échanger des informations avec lesdits terminaux, système dans lequel une pluralité de plates-formes logicielles, conformes chacune à la description qui précède, sont respectivement installées sur des moyens de mémorisation inclus dans chacun des terminaux, les applications principales desdites plates-formes logicielles étant aptes à communiquer entre elles.

Un tel mode de mise en oeuvre permet une mise en partage de ressources de différentes plates-formes logicielles, chacune possédant ses spécificités propres. Si une plate-forme logicielle a besoin d'une certaine application périphérique pour réaliser une opération particulière, mais que cette application périphérique n'est pas incluse dans la plate-forme, l'application principale de cette plate-forme pourra consulter une application principale d'une autre plate-forme logicielle en vue d'utiliser l'application périphérique recherchée si cette application périphérique est présente dans cette autre plate-forme logicielle.

L'invention concerne également, en tant que moyen essentiel pour sa mise en oeuvre, un appareil électronique incluant des moyens de mémorisation contenant des applications périphériques destinées à être chargées vers un terminal dans un système de traitement de données tel que décrit ci-dessus.

L'invention concerne aussi, en tant que moyen essentiel pour sa mise en oeuvre, un appareil électronique incluant des moyens de mémorisation contenant une plate-forme logicielle telle que décrite plus haut.

Sous une forme générale, l'invention concerne un procédé pour réaliser une plate-forme logicielle incluant:
. une application principale, destinée à gérer des échanges d'informations entre la plate-forme logicielle et un utilisateur de ladite plate-forme, et
. au moins une application périphérique possédant une fonctionalité propre et destinée à être contrôlée par l'application principale, procédé incluant une étape de chargement, sur commande de l'utilisateur, de ladite application périphérique.

Ainsi qu'exposé précédemment, l'exécution de l'étape de chargement sera avantageusement assujettie à la réalisation d'une condition par l'utilisateur, qui sera de préférence une condition de paiement, forfaitaire ou renouvelable selon le choix de l'utilisateur.

Dans le cas où la condition prévue ci-dessus est renouvelable dans le temps, le procédé selon l'invention pourra inclure une étape de mise à jour d'une table de gestion comportant, pour chaque application périphérique, un code identifiant ladite application et une date limite d'autorisation d'utilisation de ladite application par l'utilisateur.

Afin d'autoriser un paiement forfaitaire ultérieur de la part de l'utilisateur, le procédé décrit ci-dessus pourra inclure une étape de suppression de toute mention d'une application périphérique dans la table de gestion, l'exécution de ladite étape de suppression étant déclenchée en cas d'achat par l'utilisateur de ladite application périphérique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est un schéma fonctionnel décrivant un système de télécommunication selon un mode de mise en oeuvre de l'invention,
la Fig.2 est un schéma décrivant une plate-forme logicielle selon un mode de réalisation particulier de l'invention,
la Fig.3 est un schéma décrivant une interface graphique d'une plate-forme logicielle selon un mode de réalisation particulier de l'invention,
la Fig.4 est un organigramme décrivant un procédé pour réaliser une palteforme logicielle selon l'invention, et
la Fig. 5 est un organigramme décrivant un procédé pour réaliser une palteforme logicielle selon un mode de réalisation particulièrement avantageux de l'invention.

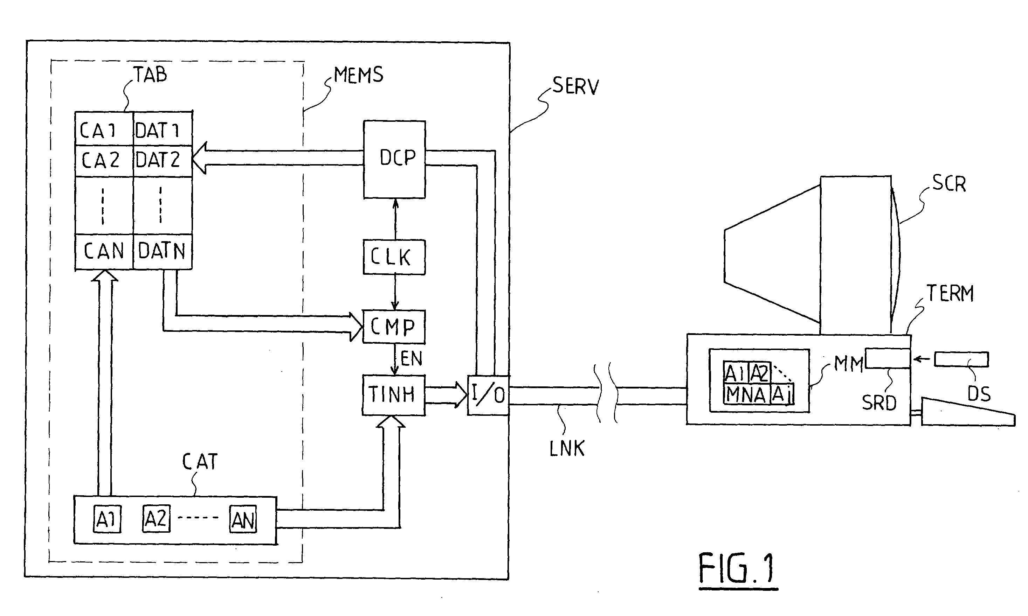

La Fig. 1 représente schématiquement un système de traitement de données dans lequel l'invention est mise en oeuvre. Ce système inclut un terminal TERM, dans cet exemple un ordinateur personnel, muni entre autres d'un écran SCR et de moyens de mémorisation MM, qui pourront être constitués par un disque dur inclus dans ledit terminal TERM. Ces moyens de mémorisation MM contiennent une plate-forme logicielle incluant:
. une application principale MNA, destinée à gérer des échanges d'informations entre la plate-forme logicielle et un utilisateur de ladite plate-forme, et
. des applications périphériques (A1, A2,...Aj) possédant chacune une fonctionnalité propre et destinées à être contrôlées par l'application principale MNA.

Ces applications périphériques (A1, A2...Aj) ont été choisies par un utilisateur parmi N applications (A1, A2...AN) mises à sa disposition depuis un catalogue CAT mémorisé dans un serveur SERV et téléchargées depuis ledit serveur SERV sur commande de l'utilisateur, via un port d'entrée/sortie I/O et un lien de communication LNK qui peut être une liaison câblée ou hertzienne. L'utilisateur aura ainsi créé une plate-forme logicielle spécifiquement destinée à répondre à ses besoins réels et essentiellement constituée d'éléments indépendants les uns des autres, ce qui autorise des mises à jour séparées de chacun de ces éléments.

Des moyens de gestion (TAB, DCP, CLK, CMP, TINH) des applications périphériques (A1, A2,...AN) sont prévus pour inhiber le téléchargement d'une telle application si l'utilisateur n'a pas réalisé une condition à laquelle le téléchargement est assujetti. Cette condition sera de préférence une condition de paiement, forfaitaire ou renouvelable dans le temps. Dans ce mode de réalisation particulier de l'invention, les moyens de gestion incluent une table de gestion TAB qui contient, pour chaque application périphérique Ai (pour i=1 à N) un code CAi identifiant ladite application Ai et une date limite DATi d'autorisation d'utilisation de ladite application Ai par l'utilisateur. Par mesure de sécurité, cette table de gestion TAB est ici contenue dans une mémoire MEMS incluse dans le serveur SERV, et donc en principe physiquement inaccessible à tout utilisateur mal intentionné.

Lorsque l'utilisateur aura choisi de procéder à un paiement renouvelable dans le temps pour obtenir un droit de télécharger une application périphérique Ai donnée, un tel paiement vaudra droit à utilisation de ladite application pendant un intervalle de temps donné, par exemple k mois. Un module de calcul DCP calculera alors, sur la base d'une date de transaction fournie par une horloge CLK, intégrée dans cet exemple dans le serveur SERV par mesure de sécurité, une date limite d'autorisation d'utilisation DATi à l'issue de laquelle l'utilisateur devra renouveler le paiement s'il souhaite encore utiliser l'application Ai concernée. En effet, lorsque l'utilisateur met en fonctionnement la plate-forme logicielle, chaque application incluse dans la plate-forme logicielle est identifiée par ladite plate-forme, ce qui déclenche une interrogation de la table de gestion TAB via le lien LNK et le port d'entrée sortie I/O. Chaque date limite correspondante DATi (pour i=1 à j) incluse dans la table TAB est comparée par un comparateur CMP à la date du jour délivrée par l'horloge CLK. S'il apparaît à l'issue de la comparaison qu'une date limite d'autorisation DATi est dépassée, l'application Ai correspondante est désactivée dans la plate-forme logicielle, dans des conditions qui seront exposées par la suite. L'utilisateur devra alors procéder à un nouveau téléchargement, qui sera inhibé par un module d'inhibition TINH disposé en amont du port d'entrée/sortie I/O tant que l'utilisateur n'aura pas réalisé une nouvelle condition, par exemple un nouveau paiement. Un signal d'autorisation EN permettant de lever cette inhibition ne sera délivré par le comparateur CMP que dans le cas où la date limite d'autorisation DATi n'aura pas encore été atteinte par l'horloge CLK. L'utilisateur pourra en outre choisir d'effectuer un paiement forfaitaire, c'est-à-dire d'acheter le droit d'utiliser une application périphérique donnée sans restriction dans le temps. Dans ce cas particulier, toute mention relative à cette application périphérique sera supprimée de la table de gestion TAB une fois le paiement forfaitaire enregistré, ce qui aura pour conséquence qu'aucune comparaison de date limite d'autorisation n'interviendra ultérieurement en ce qui concerne cette application périphérique.

Le serveur SERV pourra en outre effectuer une mémorisation de la configuration de la plate-forme logicielle définie par l'utilisateur, en correspondance avec des données d'identification, par exemple un mot de passe attribué à l'utilisateur ou choisi par celui-ci, pour que l'utilisateur puisse se connecter au serveur SERV depuis un autre terminal que le terminal TERM décrit ici et soit capable de rapatrier à distance sur cet autre terminal l'ensemble de la plate-forme logicielle dans sa configuration mémorisée par le serveur SERV.

Dans une autre application de l'invention, les applications périphériques (A1, A2,...Aj) pourront être sélectionnées par l'utilisateur parmi N applications (A1, A2...AN) présentes sur un support mémoire DS que l'utilisateur aura inséré dans un lecteur SRD inclus dans son terminal TERM. L'utilisateur commandera alors un chargement depuis le support mémoire DS vers les moyens de mémorisation MM de son terminal TERM des applications périphériques (A1, A2,...Aj) choisies par lui.

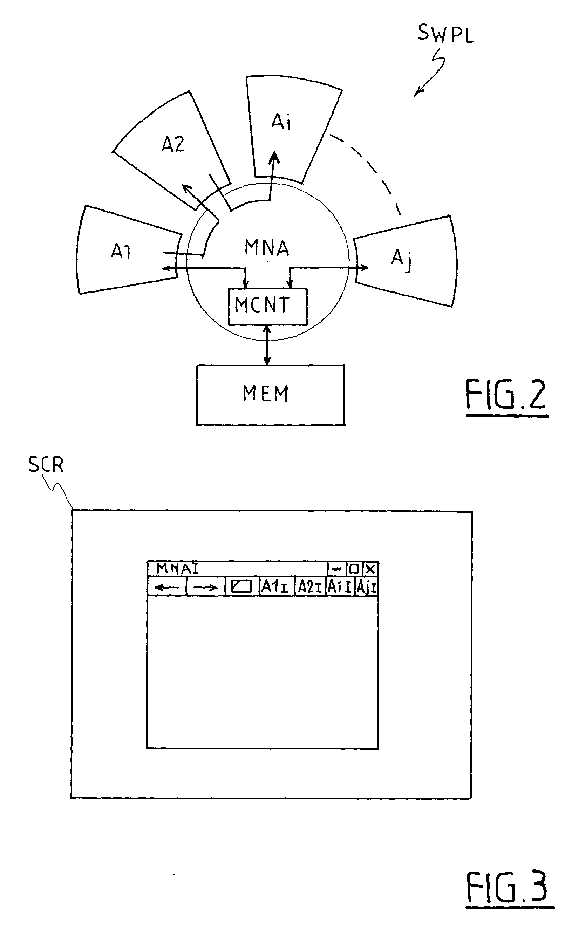

La Fig.2 représente schématiquement une plate-forme logicielle SWPLF conforme à l'invention. Cette plate-forme inclut :
. une application principale MNA, destinée à gérer des échanges d'informations entre la plate-forme logicielle et un utilisateur de ladite plate-forme, et
. des applications périphériques (A1, A2,...Aj) possédant chacune une fonctionnalité propre et destinées à être contrôlées par l'application principale MNA.

Dans cet exemple, la plate-forme logicielle SWPLF inclut une pluralité d'applications périphériques A1, A2, Ai...Aj, qui ne peuvent échanger des données entre elles que via l'application principale MNA, qui assurera si nécessaire une remise en forme des données provenant d'une application périphérique émettrice avant envoi desdites données à une application périphérique destinataire. Il n'est donc pas nécessaire, dans ce mode de réalisation, de munir les applications périphériques A1, A2, Ai...Aj de moyens destinés à opérer de telles remises en forme, qui rendraient lesdites applications périphériques beaucoup plus complexes et nuiraient à l'autonomie dont elles bénéficient les unes par rapport aux autres, autonomie qui confère à la plate-forme logicielle SWPLF selon l'invention une grande modularité.

Dans le mode de réalisation de l'invention décrit ici, l'application principale MNA est munie de moyens de contrôle MCNT pour inhiber des accès directs à des ressources mémoire MEM par les applications périphériques A1, A2, Ai...Aj.

Ces moyens de contrôle MCNT permettent de prévenir des conflits d'accès qui pourraient se produire si plusieurs applications périphériques tentaient simultanément d'agir sur des mêmes données. En effet, dans ce mode de réalisation de l'invention, les moyens de contrôle MCNT vérifieront qu'aucune application périphérique n'essaie d'accéder au contenu d'une adresse déjà en cours d'utilisation par une autre application périphérique.

La Fig.3 représente schématiquement l'aspect que présente sur un écran SCR d'un terminal une interface graphique d'une plate-forme logicielle conforme à un mode de réalisation particulier de l'invention, selon lequel, l'application principale étant munie d'une interface graphique MNAI permettant une communication entre ladite application et l'utilisateur, des interfaces graphiques A1I, A2I, AiI...AjI dont sont munies les applications périphériques incluses dans la plate-forme sont intégrées à l'interface graphique MNAI de l'application principale.

Ce mode de réalisation permet de construire une interface graphique MNAI propre à la plate-forme logicielle telle que définie par l'utilisateur et visuellement cohérente pour celui-ci, chaque application périphérique pouvant être appelée par un bouton intégré dans une barre d'outils de l'application principale. Par ailleurs, lorsque la date limite d'autorisation d'utilisation d'une application périphérique Ai sera dépassée, le bouton correspondant AiI sera supprimé de l'interface graphique MNAI de l'application principale, indiquant ainsi à l'utilisateur qu'un renouvellement de la condition à laquelle est assujetti le téléchargement de l'application périphérique Ai concernée est nécessaire.

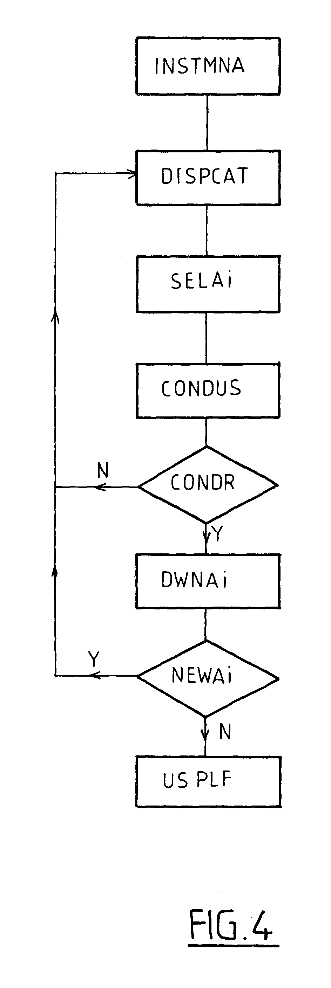

La Fig.4 illustre sous forme d'organigramme un processus de création d'une plate-forme logicielle conforme à l'invention. Dans une première étape INSTMNA, l'utilisateur installe sur son terminal l'application principale. Cette installation invite un serveur prédéterminé à afficher un catalogue d'applications périphériques disponibles dans une étape suivante DISPCAT. Au cours d'une étape suivante SELAi, l'utilisateur sélectionne une application périphérique Ai en vue de son téléchargement sur son terminal. Au cours d'une étape suivante CONDUS, il est demandé à l'utlisateur de réaliser une condition à laquelle le téléchargement de ladite application périphérique est assujetti, par exemple une condition de paiement. Au cours d'une étape de test CONDR suivante, la réalisation ou l'absence de réalisation de cette condition est examinée. En cas d'absence de réalisation, l'étape suivante est l'étape d'affichage du catalogue DISPCAT afin de donner à l'utilisateur une nouvelle possibilité de téléchargement. En cas de réalisation de la condition, l'étape suivante est une étape DWNAi de téléchargement effectif de l'application périphérique Ai choisie par l'utilisateur. A l'issue de cette étape de téléchargement, l'utilisateur peut choisir, au cours d'une étape de test NEW Ai, de télécharger une autre application, auquel cas l'étape suivante est l'étape d'affichage du catalogue DISPCAT. Dans le cas contraire, l'étape suivante est une étape USPLF d'utilisation de la plate-forme par l'utilisateur. Lorsque l'utilisateur choisira de quitter la plate-forme, on pourra avantageusement prévoir de mettre en oeuvre une étape de sauvegarde de l'état de ladite plate-forme, non représentée sur la figure, au cours de laquelle le terminal et/ou le serveur mémorisera une liste des applications périphériques que l'utilisateur aura choisi d'intégrer à la plate-forme logicielle qu'il aura construite au moyen du processus décrit ci-dessus.

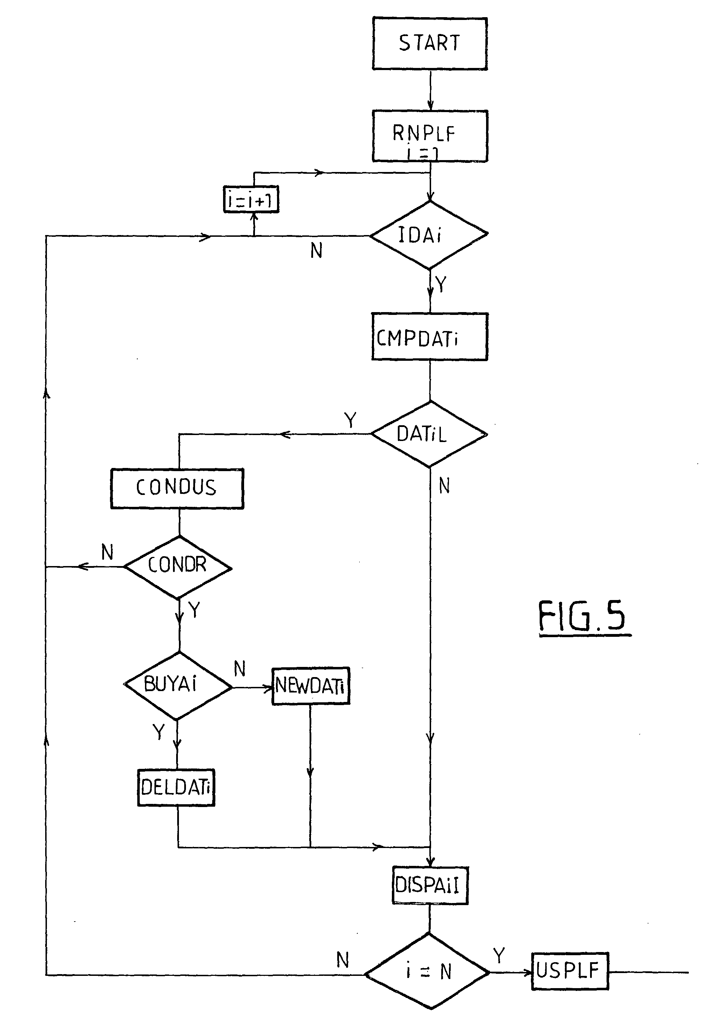

La Fig.5 décrit un processus de démarrage d'une plate-forme logicielle déjà existante. Au cours d'une première étape START, l'utilisateur met en route son terminal. Au cours d'une étape suivante RNPLF, l'utilisateur démarre la plate-forme logicielle qu'il a créée antérieurement. Un compteur est initialisé à 1 à cette occasion. Dans une étape suivante IDAi, le terminal recherche la première application périphérique A1 (i=1) qui pourrait être incluse dans la plate-forme logicielle. Si cette application périphérique n'est pas présente dans ladite plate-forme, le compteur est incrémenté d'une valeur 1 et le terminal recherche alors l'application périphérique suivante A2. Lorsqu'une application périphérique Ai est identifiée comme étant incluse dans la plate-forme logicielle, une comparaison est faite, au cours d'une étape COMPDATi, entre sa date limite d'autorisation d'utilisation DATi et la date courante. Si un test CMPDATi conclut que la valeur de la date limite n'est pas encore dépassée, l'interface graphique de l'application périphérique Ai est affichée dans l'interface graphique de la plate-forme logicielle au cours d'une étape suivante DISPAiI. Si i est alors inférieur à N, le compteur est ensuite incrémenté en vue de la recherche d'une autre application périphérique à valider au cours d'une étape suivante IDAi (avec i=i+1). Si i est alors égal à N, toutes les applications périphériques possibles ont été passées en revue et l'utilisateur peut commencer à utiliser la plate-forme au cours d'une étape suivante USPLF.

Si le test CMPDATi conclut que la date limite d'autorisation DATi est dépassée, la réalisation d'une nouvelle condition, par exemple d'une condition de paiement, est demandée à l'utilisateur au cours d'une étape suivante CONDUS. Si, à l'issue d'une étape de test suivante CONDR, il apparaît que l'utilisateur n'a pas réalisé cette condition, le compteur est incrémenté et une nouvelle application périphérique Ai (avec i=i+1) est recherchée. L'interface graphique de la précédente application périphérique Ai pour laquelle l'utilisateur a choisi de ne pas renouveler la condition n'apparaîtra pas dans l'interface graphique de l'application principale et ladite application périphérique Ai sera donc inutilisable. Si, au contraire, il apparaît à l'issue de l'étape de test CONDR que l'utilisateur a réalisé la condition requise à l'étape CONDUS précédente, une autre étape de test BUYAi détermine si le nouveau paiement est un paiment renouvelable ou forfaitaire. Si le nouveau paiement est renouvelable, une nouvelle date limite DATi sera affectée à l'application périphérique Ai considérée au cours d'une étape suivante NEWDATi de mise à jour de la table de gestion. Si, au contraire, le nouveau paiement est un paiement forfaitaire, c'est-à-dire si l'utilisateur a en quelque sorte procédé à un achat de la fonctionnalité propre à l'application périphérique Ai, toutes les données relatives à ladite application périphérique Ai seront supprimées de la table de gestion, de sorte que ladite application ne fasse plus ultérieurement l'objet d'une identification dans l'étape IDAi. Quelle que soit la conclusion du test BUYAi, l'interface graphique de l'application périphérique Ai est affichée dans l'interface graphique de la plate-forme logicielle au cours de l'étape DISPAiI, de manière à ce que l'utilisateur puisse utiliser la fonctionnalité correspondante au sein de la plate-forme logicielle qu'il aura construite en réponse à ses besoins propres.

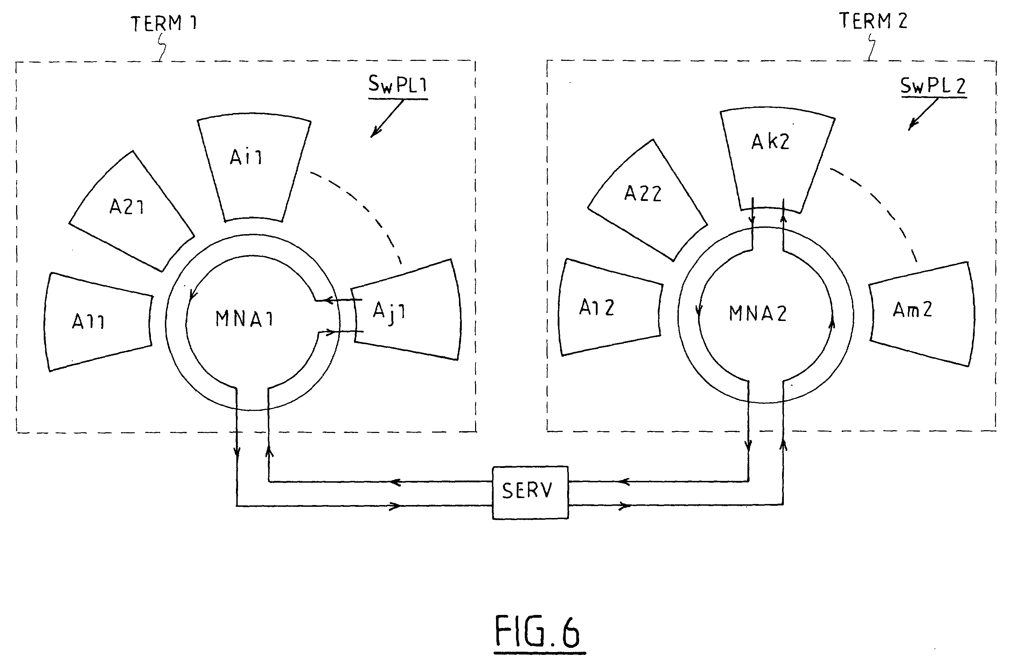

La Fig.6 représente schématiquement un mode de mise en oeuvre de l'invention en réseau multi-utilisateurs, qui concerne un système de traitement de données qui inclut un serveur et des premier et deuxième terminaux TERM1 et TERM2, destinés à être mis à disposition de premier et deuxième utilisateurs du système. Le serveur SERV est apte à échanger des informations avec lesdits terminaux TERM1, TERM2. Des première et deuxième plates-formes logicielles SWPL1 et SWPL2, sont respectivement installées sur des moyens de mémorisation inclus dans chacun des terminaux TERM1 et TERM2. Chaque plate-forme logicielle SWPL1 ou SWPL2 inclut une application principale MNA1 ou MNA2 et des applications périphériques (A11, A21, Ai1,...Aj1) ou (A12, A22, Ak2,...Am2), ainsi qu'exposé plus haut. Les applications principales MNA1 et MNA2 desdites plates-formes logicielles sont aptes à communiquer entre elles.

Un tel mode de mise en oeuvre permet une mise en partage de ressources de différentes plates-formes logicielles, chacune possédant ses spécificités propres. Si, une plate-forme logicielle a besoin d'une certaine application périphérique pour réaliser une opération particulière, mais que cette application périphérique n'est pas incluse dans la plate-forme, l'application principale de cette plate-forme pourra consulter une application principale d'une autre plate-forme logicielle en vue d'utiliser l'application périphérique recherchée si cette application périphérique est présente dans cette autre plate-forme logicielle.

Si par exemple, la première plate-forme logicielle SWPL1 doit lire un fichier de type gif, mais ne dispose que d'une application périphérique capable de lire des fichiers .bmp, dans cet exemple Aj1, l'application principale MNA1 de cette première plate-forme logicielle SWPL1, après avoir passé en revue toutes les applications périphériques (A11, A21, Ai1,...Aj1) dont elle dispose, va rechercher par l'intermédiaire de l'application principale MNA2 de la deuxième plate-forme logicielle SWPL2 une application périphérique apte à convertir des fichiers .gif en fichiers .bmp. Il s'agira dans cet exemple de l'application périphérique Ak2. Le fichier .gif à traduire est alors envoyé par l'application principale MNA1 de la première plate-forme logicielle SWPL1 à ladite application Ak2, via l'application principale MNA2 de la deuxième plate-forme logicielle SWPL2, qui envoie en retour par le même chemin à l'application Ak1 un fichier converti au format .bmp que ladite application est alors capable de lire.

## Revendications

1. Plate-forme logicielle, incluant :
. une application principale, destinée à gérer des échanges d'informations entre la plate-forme logicielle et un utilisateur de ladite plate-forme, et
. au moins une application périphérique possédant une fonctionnalité propre et destinée à être contrôlée par l'application principale après chargement depuis un support mémoire sur commande de l'utilisateur.

2. Plate-forme logicielle selon la revendication 1, pour laquelle le support mémoire est inclus dans un serveur apte à communiquer avec l'utilisateur via un réseau de communication.

3. Plate-forme logicielle selon la revendication 1, **caractérisée en ce qu'**elle inclut au moins deux applications périphériques aptes à échanger des données entre elles via l'application principale.

4. Plate-forme logicielle selon la revendication 1, caractérisée en ce l'application principale est munie de moyens de contrôle pour inhiber des accès à des ressources mémoire par une application périphérique.

5. Plate-forme logicielle selon la revendication 1, **caractérisée en ce que**, l'application principale étant munie d'une interface graphique permettant une communication entre ladite application et l'utilisateur, une interface graphique dont est munie une application périphérique incluse dans la plate-forme est intégrée à l'interface graphique de l'application principale.

6. Plate-forme logicielle selon la revendication 1, **caractérisée en ce qu'**elle inclut en outre des moyens de gestion des applications périphériques permettant d'inhiber le chargement d'une telle application si l'utilisateur n'a pas réalisé une condition à laquelle le chargement est assujetti.

7. Plate-forme logicielle selon la revendication 6, **caractérisée en ce que**, la réalisation de la condition à laquelle le chargement est assujetti étant renouvelable dans le temps, les moyens de gestion des applications périphériques incluent une table de gestion comportant, pour chaque application périphérique, un code identifiant ladite application et une date limite d'autorisation d'utilisation de ladite application par l'utilisateur.

8. Logiciel apte à remplir les fonctions d'une application principale dans une plate-forme logicielle selon les revendications 1 à 7.

9. Logiciel apte à remplir les fonctions d'une application périphérique dans une plate-forme logicielle selon les revendications 1 à 7.

10. Support de données incluant sous forme encodée un logiciel conforme à l'une des revendications 8 ou 9.

11. Système de traitement de données incluant un serveur et un terminal destiné à être mis à disposition d'un utilisateur du système, le serveur et le terminal étant aptes à échanger des informations l'un avec l'autre, système dans lequel une plate-forme logicielle conforme à l'une des revendications 1 à 5 est installée sur des moyens de mémorisation inclus dans le terminal.

12. Système de traitement de données incluant un serveur et une pluralité de terminaux destinés à être mis à disposition d'une pluralité d'utilisateurs du système, le serveur étant apte à échanger des informations avec lesdits terminaux, système dans lequel une pluralité de plates-formes logicielles conformes chacune à l'une des revendications 1 à 5 sont respectivement installées sur des moyens de mémorisation inclus dans chacun des terminaux, les applications principales desdites plates-formes logicielles étant aptes à communiquer entre elles.

13. Système de traitement de données selon l'une des revendications 11 ou 12, **caractérisé en ce que** le serveur est muni de moyens de mémorisation contenant des moyens de gestion des applications périphériques permettant d'inhiber le chargement d'une telle application si l'utilisateur n'a pas réalisé une condition à laquelle le téléchargement est assujetti.

14. Appareil électronique incluant des moyens de mémorisation contenant des applications périphériques destinées à être chargées vers un terminal dans un système de traitement de données selon la revendication 11.

15. Appareil électronique incluant des moyens de mémorisation contenant une plate-forme logicielle conforme à l'une des revendications 1 à 5.

16. Procédé pour réaliser une plate-forme logicielle incluant:
. une application principale, destinée à gérer des échanges d'informations entre la plate-forme logicielle et un utilisateur de ladite plate-forme, et
. au moins une application périphérique possédant une fonctionalité propre et destinée à être contrôlée par l'application principale,
procédé incluant une étape de chargement depuis un support mémoire de ladite application périphérique sur commande de l'utilisateur.

17. Procédé selon la revendication 16, dans lequel le support mémoire est inclus dans un serveur apte à communiquer avec l'utilisateur via un réseau de communication.

18. Procédé selon la revendication 17, dans lequel l'exécution de l'étape de chargement est assujettie à la réalisation d'une condition par l'utilisateur.

19. Procédé selon la revendication 18, **caractérisé en ce que**, la réalisation de la condition à laquelle l'exécution de l'étape de chargement est assujettie étant renouvelable dans le temps, le procédé inclut en outre une étape de mise à jour d'une table de gestion comportant, pour chaque application périphérique, un code identifiant ladite application et une date limite d'autorisation d'utilisation de ladite application par l'utilisateur.

20. Procédé selon la revendication 19, **caractérisé en ce que** ladite condition est une condition de paiement.

21. Procédé selon la revendication 20, **caractérisé en ce qu'**il inclut en outre une étape de suppression de toute mention d'une application périphérique dans la table de gestion, l'exécution de ladite étape de suppression étant déclenchée en cas d'achat par l'utilisateur de ladite application périphérique.
